(19) Europäisches Patentamt
European Patent Office
Office européen des brevets

(11) **EP 2 587 231 B1**

(12) **EUROPEAN PATENT SPECIFICATION**

(45) Date of publication and mention
of the grant of the patent:
**01.02.2017   Bulletin 2017/05**

(51) Int Cl.:
***G01H 9/00*** *(2006.01)*

(21) Application number: **12182615.0**

(22) Date of filing: **31.08.2012**

(54) **Method and apparatus for range resolved laser doppler vibrometry**

Verfahren und Vorrichtung für bereichsaufgelöste Laser-Doppler-Vibrometrie

Procédé et appareil pour vibrométrie laser à effet Doppler avec résolution de plage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2011   US 201113285821**

(43) Date of publication of application:
**01.05.2013   Bulletin 2013/18**

(73) Proprietor: **Raytheon Company
Waltham, MA 0245-1449 (US)**

(72) Inventors:
• **KLOTZ, Matthew J.**
**Pasadena, CA 91101-3922 (US)**
• **BULOT, Jean-Paul**
**El Segundo, CA 90245 (US)**

(74) Representative: **Carpmaels & Ransford LLP
One Southampton Row
London WC1B 5HA (GB)**

(56) References cited:
WO-A1-2004/034530      US-A1- 2005 237 533
US-A1- 2007 166 049      US-A1- 2009 304 393
US-B1- 7 805 082

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

This disclosure relates generally to the field of optics and, more specifically, to a method and apparatus for range resolved laser Doppler vibrometry.

BACKGROUND

Conventional laser Doppler vibrometers provide information regarding target vibration frequency and magnitude, but do not simultaneously provide any information about the range to target. Further, if there are multiple areas of a target vibrating at the same frequency, a conventional vibrometer is incapable of resolving the range between those vibrating areas. As a result, conventional laser Doppler vibrometers are able to accurately generate only a two-dimensional map of the vibrating object. What is needed is a laser Doppler vibrometer that simultaneously resolves vibrating objects at the same frequency but separated by a distance. US 2007/166049 discloses a laser vibrometer in which a frequency modulated laser source is used for the transmit beam and the local oscillator signal. WO2004/034530 discloses a photonic integrated circuit comprising an array of modulated sources, each providing a modulated signal output at a different wavelength.

SUMMARY

In accordance with various embodiments of this disclosure, a method for optically resolving one or more vibrating objects at an unknown distance using a vibrometer. The vibrometer includes a processor, a memory, and an optical device including a transmitter and a receiver. The method includes transmitting a first optical waveform having a linear frequency modulated chirp from the transmitter towards a region of space. At the receiver, a second optical waveform reflected from the one or more vibrating objects in the region of space is received. The vibrometer determines both a vibration frequency and a range information associated with the one or more vibrating objects based upon one or more characteristics of the second optical waveform. The determined vibration frequency and range information are stored in the memory for processing by the processor.

In accordance with various embodiments of this disclosure, an optical system includes a vibrometer having a processor, a memory, and an optical device having a transmitter and a receiver. The transmitter is configured to transmit a first optical waveform having a linear frequency modulated chirp towards a region of space. The receiver is configured to receive a second optical waveform reflected from one or more vibrating objects in the region of space. The processor determines both a vibration frequency and a range information associated with the one or more vibrating objects based upon one or more characteristics of the second optical waveform. The processor resolves respective locations of each of the one or more vibrating objects based upon the determined frequency of vibration and the range information.

These and other features and characteristics, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various Figures. It is to be expressly understood, however, that the drawings are for the purpose of illustration and description only and are not intended as a definition of the limits of claims. As used in the specification and in the claims, the singular form of "a", "an", and "the" include plural referents unless the context clearly dictates otherwise.

BRIEF DESCRIPTION OF THE DRAWINGS

**Figure 1** shows an example block diagram for an optical system for range resolved laser Doppler vibrometry, in accordance with an embodiment.

**Figure 2** shows a flowchart of a method for optically resolving one or more vibrating objects at an unknown distance using a vibrometer of the optical system of Figure 1, in accordance with an embodiment.

DETAILED DESCRIPTION

In the description that follows, like components have been given the same reference numerals, regardless of whether they are shown in different embodiments. To illustrate embodiment of the present disclosure in a clear and concise manner, the drawings may not necessarily be to scale and certain features may be shown in somewhat schematic form. Features that are described and/or illustrated with respect to one embodiment may be used in the same way or in a similar way in one or more other embodiments and/or in combination with or instead of the features of the other embodiments.

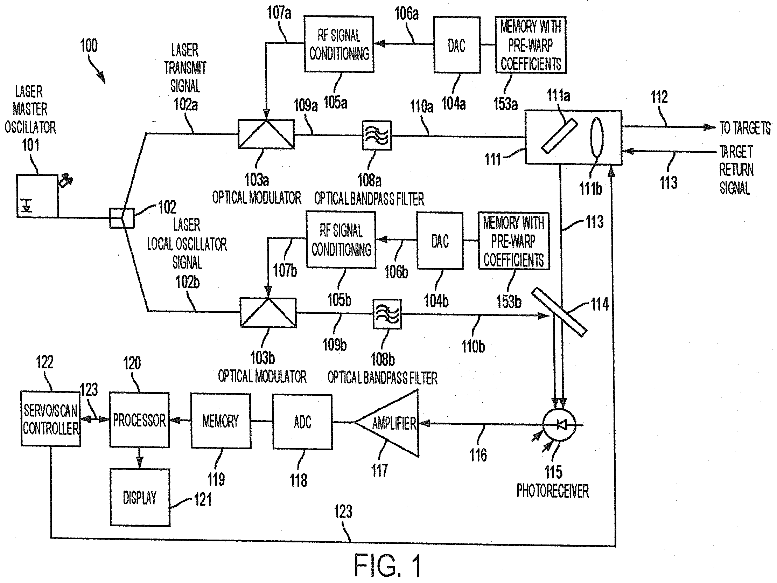

Figure 1 shows an example block diagram for electro-optical system 100 for range resolved laser Doppler vibrometry, in accordance with an embodiment. Electro-optical system 100 includes, among other components, laser master oscillator 101. Output of laser master oscillator 101 is optically split into two signal paths by beam splitter 102 or optical beam splitter 102, providing optical beams of radiation 102a and 102b. In one embodiment, laser master oscillator 101 is a continuous wave laser outputting at a wavelength of 1550 nm to provide a narrow linewidth optical carrier as an output to beam splitter 102, although other laser output wavelengths may be obtained using other types of laser oscillators, as can be contemplated by one of ordinary skill in the art.

Beam splitter 102 is optically coupled to optical modulators 103a and 103b. In one aspect, optical beam splitter 102 is a fused fiber splitter, with a 50/50 split ratio between respective signal paths of optical beams of radiation 102a and 102b, although other types of beam splitters with split ratios other than 50/50 could be used.

Electro-optical system 100 includes high-speed, digital memory 153a, 153b with time-domain samples of digital radio frequency (RF) waveform data stored thereupon, among other stored data. The time-domain samples have been modified using information obtained from pre-warp coefficients, described below, for compensating amplitude and phase distortions due to various components of optical system 100. Waveform data in memory 153a, 153b represents the time-domain samples of a linear frequency-modulated (FM) chirp waveform and is provided to digital to analog converters (DACs) 104 a, 104b, respectively.

DACs 104a, 104b are configured to generate analog RF waveforms 106a, 106b, respectively. DACs 104a, 104b are coupled to RF signal conditioning modules 105a, 105b, respectively, and output analog waveforms 106a, 106b, respectively. Analog waveforms 106a, 106b are amplified and frequency shifted by RF signal conditioning modules 105a, 105b to produce signals 107a and 107b with desired waveform bandwidth (BW), which is related to the desired range resolution of targets resolved by optical system 100 in vibrometry application(s) by equation (1):

$$\Delta z = \frac{c}{2 * BW}$$

$$(1)$$

where $\Delta z$ is the range resolution between the vibrating objects, c is the speed of light and BW is the RF modulation bandwidth of signals 107a and 107b, which is programmable.

RF conditioning modules 105a, 105b are electrically coupled to and provide RF conditioned signals 107a and 107b to optical modulators 103a, 103b, where RF conditioned signals 107a and 107b modulate optical carriers formed by optical beams of radiation 102a, 102b, respectively, and synthesize optical signals 109a and 109b, respectively possessing waveform bandwidth equivalent to the RF conditioned signals 107a and 107b. RF conditioning modules 105a, 105b include, among other components, RF amplifiers, bandpass filters, RF isolators and RF frequency doublers.

Optical modulators 103a, 103b are optically coupled to optical bandpass filters 108a, 108b, respectively. Optical bandpass filters 108a and 108b respectively remove any unwanted spurious optical signals from optical signals 109a, 109b, respectively. In one embodiment, by way of example only and not by way of limitation, optical modulators 103a, 103b are fiber coupled lithium niobate (LiNbO$_3$) amplitude modulators, commonly used in telecommunications systems. In one embodiment, optical modulators 103a and 103b are each Mach-Zehnder type modulators configured to generate or output a plurality of pulses as optical signals 109a and 109b, respectively, that are passed through optical bandpass filters 108a and 108b, respectively. Optical modulators 103a, 103b each output clean dual sideband suppressed carrier (DSB-SC) modulated linear FM chirp signals 109a and 109b.

Time-domain waveform data in memories 153a, 153b is configured such that the stored data samples contain one or more representations of distortion that may be encountered by the signals in optical system 100 and therefore compensate for phase and amplitude distortions in electrical and optical devices in the signal path from DACs 104a, 104b to RF Signal Conditioning modules 105a and 105b, respectively, to optical modulators 103a and 103b and optical bandpass filters 108a and 108b, producing near theoretically perfect modulated optical single-sideband suppressed carrier (SSB-SC) modulated linear FM chirp signals 110a and 110b. This technique is known as pre-warping and is described, for example, in U.S. Patent Application Serial No. 12/793,028, entitled "METHOD AND APPARATUS FOR SYNTHESIZING AND CORRECTING PHASE DISTORTIONS IN ULTRA-WIDE BANDWIDTH OPTICAL WAVEFORMS," filed June 3, 2010, incorporated by reference herein in its entirety. In an embodiment, optical modulators 103a and 103b are configured to produce modulated optical signals 109a, 109b, respectively that are dual-sideband suppressed carrier (DSB-SC) waveforms with linear frequency modulated (FM) chirp. DSB-SC linear FM chirp optical waveforms 109a and 109b are passed through optical bandpass filters 108a and 108b, respectively. By way of example only and not by way of limitation, optical bandpass filters 108a and 108b may be. Fiber Bragg Gratings configured as optical bandpass filters reflecting the optical sideband of interest while removing the other optical sideband and residual optical carrier. The result of optical filtering are optical single-sideband suppressed carrier (SSB-SC) linear FM chirp signals 110a and 110b created from optical carriers 102a and 102b, respectively, provided by laser master oscillator 101. In this embodiment, optical FM chirp signal 110a is intended to provide target signal 112 and signal 110b to provide a local oscillator signal for heterodyne detection, as described below.

Signal 110a is provided to optical device 111 configured to optically shape and steer signal 112 towards one or more targets using, for example, gimbaled mirror 111a and telescope 111b. Optical device 111 is configured as a transceiver, i.e., a transmitter for FM chirp signal 110a and a receiver for one or more target return signals 113 received after reflection from one or more targets (stationary and/or vibrating). Although referred to as optical device 111, optical device 111 may include additional optical, electrical, electro-optical, mechanical, electro-mechanical, and optomechanical components for beam shaping and steering, as can be contemplated by one of ordinary skill in the art in view of this disclosure. When targets are present, optical device 111 receives one or more target return signals 113 with frequency and phase signatures of the vibrating targets embedded therein. By way of example only, the one or more vibrating objects may be part of a vibrating object body (e.g., parts of a truck).

Target return signal 113 is steered toward and provided to beam combiner 114, where target return signal 113 is optically heterodyned with optical FM chirp signal 110b acting as a local oscillator signal. Photoreceiver 115 is optically coupled to optical device 111 via beam combiner 114, and receives a combination of FM chirp signal 110b and one or more target return signals 113. In one embodiment, photoreceiver 115 and beam combiner 114 may be integrated with optical device 111 to form the receiver for one or more target return signals 113. Photoreceiver 115 is arranged to heterodyne FM chirp signal 110b and one or more target return signals 113. Since heterodyning of such signals is known to those of ordinary skill in the art, it will not be described herein. Photoreceiver 115 may be a photoreceiver designed for a spectral response over a wide range of optical wavelengths such as those provided by Newport Corporation of Irvine, CA, for example. In one embodiment, optical device 111, beam combiner 114 and photoreceiver 115 are jointly referred to as a receiver for the vibrometer formed by optical system 100.

Output of photoreceiver 115 is heterodyned electrical RF signal 116. In this embodiment, the total target round trip distance is less than the coherence length of master oscillator laser 101. Thus, signals 110a, 110b, and 113 are mutually coherent and have a deterministic phase relationship. This provides for coherent, heterodyne detection of one or more target return signals 113 at photoreceiver 115. One or more target return signals 113 have respective frequency shifts (denoted by $\Delta f$) associated with target velocity changes (e.g., resulting from vibration of the targets) and are related to the target velocity by the Doppler equation:

$$\Delta f = 2*V*\cos(\theta)/\lambda \qquad (2)$$

where V is the target velocity, $\theta$ is the angle of incidence between the optical beam (i.e., target signal 112) and a surface normal to the vibration direction, and $\lambda$ is the optical wavelength of target signal 112. Such frequency shifts result in frequency changes in heterodyne signal 116. Such measurement of Doppler shift using equation (2) is therefore, used to determine the vibration frequency information of the one or more vibrating objects.

Thus heterodyned electrical signal 116 has frequency and phase information characteristic of one or more vibrating objects of a vibrating body. The frequency and phase information is used to resolve range and physical separation between two or more targets in a region of space towards which target signal 112 is steered or directed. Photoreceiver 115 is electrically coupled to amplifier 117 that receives heterodyned electrical signal 116. In one embodiment, amplifier 117 can be a low noise amplifier (LNA), although other types of suitable amplifier known to those of ordinary skill in the art may be used. Amplifier 117 is electrically coupled to analog to digital converter (ADC) 118 that converts the amplified analog output of amplifier 117 into a digital signal for storage in memory 119. It is to be noted that memory 119, 153a, and 153b may be conventional memory units such as Random Access Memory (RAM), or other forms of tangible optical, magnetic, or electrical memory known to those of ordinary skill in the art.

Stored digital signal in memory 119 is then provided to processor 120 that processes the digital signal to determine the frequency changes in the digitized RF signal that are proportional to the target vibration. By scanning optical device 111 with scan/servo controller 122 that sends scan angle data 123 to optical device 111 and processor 120, digital data outputted from memory 119 can be associated with scan angles commanded by scan/servo controller 122. Using the associated data, processor 120 can, for example, generate a three dimensional range resolved map of targets for displaying on display 121 that shows spatial resolution between targets vibrating at the same or different frequencies in a target object, although such data may be used for other purposes such as enhancing performance of optical system 100.

In one embodiment, one or more components of optical system 100 are arranged as a vibrometer configured to simultaneously resolve range and frequency information of two or more vibrating object or targets based upon the specific arrangement of optical and electrical components in optical system 100, and utilizing equations (1) and (2). In another embodiment, optical system 100 forms a vibrometer. For example, the two or more vibrating objects can be two or more different parts of the same vibrating body that are physically separated but are vibrating at the same frequency. Such vibrating frequency may be same as or different from an overall vibrating frequency of the vibrating object. For example, the vibrating object may be a truck hidden under an optically opaque cover, and having a front and a rear part vibrating at the same frequency. Using the examples described herein, physical separation and frequency information of the vibrating targets is determined.

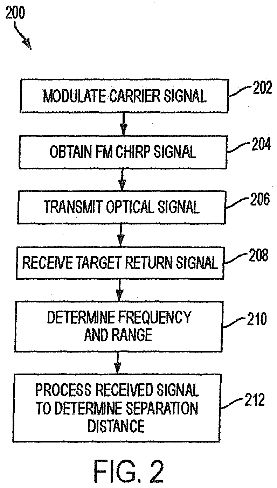

Figure 2 shows a flowchart for method 200 for optically resolving one or more vibrating objects at an unknown distance using a vibrometer of optical system 100 of Figure 1, in accordance with an embodiment.

Method 200 begins at step 202 where laser master oscillator signals 102a and 102b from laser master oscillator 101 are modulated using RF conditioned signals 107a and 107b, respectively, having pre-warp compensation from coefficients stored in memories 153a, 153b, respectively at optical modulators 103a and 103b, respectively. Pre-warp compensation stored in memories 153a and 153b removes amplitude and phase distortions present in signal chains of optical system 100 resulting in clean optical SSB-SC modulated linear FM chirp signal 110a prior to transmission and optical SSB-SC modulated linear FM chirp signal 110b (used as local oscillator signal) prior to heterodyning with target return signal 113.

In step 204, as a result of modulation by optical modulators 103a and 103b, DSB-SC linear FM chirp optical waveforms 109a and 109b are obtained at respective outputs of optical modulators 103a and 103b.

In step 206, after filtering by optical bandpass filter 108a and passing through optical device 111 configured as a transceiver, target signal 112 having a linear FM chirp is transmitted towards one or more targets in a region of space. In parallel, linear FM chirp optical waveform 109b is optical bandpass filtered by optical bandpass filter 108b to obtain optical SSB modulated linear FM chirp signal 110b to be used for heterodyning, as discussed below. In one embodiment, transmitted target signal 112 comprises a plurality of pulses that are frequency modulated portions of the carrier.

In step 208, when one or more targets are present, target return signal 113, upon reflection from the one or more targets, is received at optical device 111, configured as a receiver. Target optical return signal 113 contains modified frequency and phase resulting from the vibrating objects from which return signal 113 was reflected.

In step 210, using optical local oscillator signal formed by FM chirp signal 110b to create a heterodyne signal at photoreceiver 115, phase and frequency of one or more target return signals 113 are extracted and converted into equivalent electrical target return signals 116. One or more target electrical return signals 116 are amplified by amplifier 117, and digitized by ADC 118, resulting in a time-domain series of digital data samples stored in digital memory 119. Digital data samples stored in memory 119 contain the modified frequency and phase information resulting from the interaction of the optical target signal 112 and target vibrational behavior.

In step 212, the time domain samples in digital memory 119 are processed using radar range-Doppler techniques to locate targets in range. Such techniques can be implemented, for example, using processor 120. Observation of a particular target's change of frequency and phase from pulse to pulse, per equation (1) enables the extraction of the target's time-Doppler history which can be analyzed via power spectral density methods to compute the target's vibration signature. Processor 120 can be programmed to apply techniques to data samples stored in memory 119 for processing and further analysis, for example, to generate a three-dimensional map that resolves the distance between the targets along with their respective vibration frequencies. The separation distance between the vibrating objects is determined by processor 120 based upon an amount of frequency modulation of signal 116, according to equation (1) above.

Using aspects of this disclosure, various applications can be advantageously implemented. For example, the disclosure can be applied to long-range airborne coherent Ladar imaging. For example, improved imaging resolution of a Ladar compared to MWIR or LWIR sensors at similar range can be achieved using the disclosure. Another application includes using coherent Ladar waveforms with large time-bandwidth to offer superior resolution capabilities to existing technologies.

Although the above disclosure discusses what is currently considered to be a variety of useful embodiments, it is to be understood that such detail is solely for that purpose, and that the appended claims are not limited to the disclosed embodiments, but, on the contrary, are intended to cover modifications and equivalent arrangements that are within the scope of the appended claims.

## Claims

1. A method for optically resolving one or more vibrating objects at an unknown distance using a vibrometer (100), the vibrometer comprising a processor (120), a memory (119), and an optical device comprising a transmitter and a receiver (115), the method comprising:

   transmitting a first optical waveform (112) having a linear frequency modulated chirp from the transmitter towards a region of space;
   receiving, at the receiver (115), a second optical waveform (113) reflected from the one or more vibrating objects in the region of space;
   determining, by the vibrometer (100), both a vibration frequency and a range information associated with the one or more vibrating objects based upon one or more characteristics of the second optical waveform (113); and
   storing, in the memory (119), the determined vibration frequency and range information for processing by the processor (120); wherein the determining comprises heterodyning, at a photoreceiver in the receiver (115), a third optical waveform (110b) with the second received optical waveform (113) to produce a heterodyned signal (116) used for the determining;
   and **characterised in that** the method further comprises:

      compensating, at the vibrometer (100), the first optical waveform (112) for distortion pri-

or to the transmitting, and the third optical waveform (110b) prior to the heterodyning, using one or more representations of the distortion stored in the memory (153a, 153b).

2. The method of claim1, wherein during said heterodyning, the third waveform (110b) is provided as a local oscillator signal to the photoreceiver (115).

3. The method of claim 1 or of any preceding claim, wherein the determinating comprises measuring a Doppler shift of the received second optical waveform (113) to determine the vibration frequency information of the one or more vibrating objects.

4. The method of claim 1 or of any preceding claim, wherein the first (112) and third optical waveforms (110b) each comprise a plurality of pulses produced using a pair of Mach-Zehnder modulators (103a, 103b).

5. An optical system, comprising:

   a vibrometer (100) comprising a processor (120), a memory (119), and an optical device comprising a transmitter and a receiver (115), wherein:

   the transmitter is configured to transmit a first optical waveform (112) having a linear frequency modulated chirp towards a region of space;
   the receiver (115) is configured to receive a second optical waveform (113) reflected from one or more vibrating objects in the region of space; and
   wherein the processor (120):

   is configured to determines both a vibration frequency and a range information associated with the said one or more vibrating objects based upon one or more characteristics of the second optical waveform (113), and
   to resolve respective locations of each of the one or more vibrating objects based upon the determined frequency of vibration and the range information;

   and wherein the vibrometer (100) comprises a laser master oscillator (101) configured to generate a third optical waveform (110b) arranged to be heterodyned at the receiver (115) with the second received optical waveform (113) to produce a heterodyned signal (116) used by the processor (120) to determine the vibration frequency and range information,
and **characterised in that** the vibrometer (100) is configured to compensate the first optical waveforms (112) for distortion prior to a transmission by the transmitter, and the third optical waveform (110b) prior to the heterodyning at the receiver (115), using one or more representations of the distortion stored in the memory (153a, 153b).

6. The optical system of claim5, or the method of any of claims 2 to 6, wherein a phase relationship between the first (112), the second (113), and the third (110b) optical waveforms is deterministic.

7. The optical system of claim 5 or of claim 6, wherein a separation distance between the vibrating objects is determined at the receiver based upon an amount of frequency modulation of the first waveform (112); or
the method of any preceding method claim wherein the vibrating objects are separated by a distance that is determined at the receiver based upon the amount of frequency modulation of the first waveform (112).

8. The optical system of claim 5 or of any of claims 6 to 7, or the method of any preceding method claim, wherein the one or more vibrating objects are a part of a vibrating object body.

9. The optical system of claim 5 or of any of claims 6 to 8, wherein the vibrometer (100) is configured to measure Doppler shift of the received second optical waveform (113) to determine the vibration frequency information of the one or more vibrating objects.

10. The optical system of claim 5, or of any of claims 6 to 11, or the method of any preceding method claim, wherein the one or more characteristics of the second optical waveform (113) include at least one of frequency and phase.

11. The optical system of claim 5 or of any of claims 6 to 10, wherein the vibrometer (100) comprises a pair of Mach-Zehnder modulators (103a, 103b), and wherein the first and third optical waveforms (112, 113) each comprise a plurality of pulses produced using the pair of Mach-Zehnder modulators (103a, 103b).

**Patentansprüche**

1. Verfahren zum optischen Auflösen eines oder mehrerer vibrierender Objekte in einem unbekannten Abstand unter Verwendung eines Vibrometers (100), wobei das Vibrometer einen Prozessor (120), einen Speicher (119) und eine optische Vorrichtung, die einen Sender und einen Empfänger (115) umfasst, umfasst, wobei das Verfahren Folgendes umfasst:

Senden einer ersten optischen Wellenform (112) mit einem linear frequenzmodulierten Chirp von dem Sender zu einem Raumgebiet hin;
Empfangen einer zweiten optischen Wellenform (113) am Empfänger (115), die von dem einen oder den mehreren vibrierenden Objekten im Raumgebiet reflektiert wird;
Bestimmen von sowohl einer Vibrationsfrequenz als auch von Abstandsinformationen, die dem einen oder den mehreren vibrierenden Objekten zugeordnet sind, durch das Vibrometer (110) auf Basis eines oder mehrerer Merkmale der zweiten optischen Wellenform (113); und
Speichern der bestimmten Vibrationsfrequenz und der Abstandsinformationen zum Verarbeiten durch den Prozessor (120) im Speicher (119); wobei das Bestimmen Überlagern einer dritten optischen Wellenform (110b) mit der zweiten empfangenen optischen Wellenform (113) an einem Photoempfänger im Empfänger (115) umfasst, um ein für das Bestimmen verwendetes überlagertes Signal (116) zu erzeugen;
und **dadurch gekennzeichnet, dass** das Verfahren ferner Folgendes umfasst:

Kompensieren einer Verzerrung der ersten optischen Wellenform (112) vor dem Senden und der dritten optischen Wellenform (110b) vor dem Überlagern im Vibrometer (100) unter Verwendung einer oder mehrerer Repräsentationen der Verzerrung, die im Speicher (153a, 153b) gespeichert sind.

2. Verfahren nach Anspruch 1, wobei die dritte Wellenform (110b) während des Überlagerns als ein lokales Oszillatorsignal an den Photoempfänger (115) geliefert wird.

3. Verfahren nach Anspruch 1 oder einem vorhergehenden Anspruch, wobei das Bestimmen Messen einer Dopplerverschiebung der empfangenen zweiten optischen Wellenform (113) umfasst, um die Vibrationsfrequenzinformationen des einen oder der mehreren vibrierenden Objekte zu bestimmen.

4. Verfahren nach Anspruch 1 oder einem vorhergehenden Anspruch, wobei die erste (112) und dritte optische Wellenform (110b) jeweils mehrere Pulse umfassen, die unter Verwendung eines Paares von Mach-Zehnder-Modulatoren (103a, 103b) erzeugt werden.

5. Optisches System, das Folgendes umfasst:

ein Vibrometer (100), das einen Prozessor (120), einen Speicher (119) und eine optische Vorrichtung, die einen Sender und einen Empfänger (115) umfasst, umfasst, wobei:

der Sender zum Senden einer ersten optischen Wellenform (112) mit einem linear frequenzmodulierten Chirp zu einem Raumgebiet hin konfiguriert ist;
der Empfänger (115) zum Empfangen einer zweiten optischen Wellenform (113) konfiguriert ist, die von einem oder mehreren vibrierenden Objekten im Raumgebiet reflektiert wird; und
wobei der Prozessor (120):

zum Bestimmen von sowohl einer Vibrationsfrequenz als auch von Abstandsinformationen, die dem einen oder den mehreren vibrierenden Objekten zugeordnet sind, auf Basis eines oder mehrerer Merkmale der zweiten optischen Wellenform (113), und
zum Auflösen jeweiliger Positionen von jedem des einen oder der mehreren vibrierenden Objekte auf Basis der bestimmten Vibrationsfrequenz und der Abstandsinformationen konfiguriert ist;
und wobei das Vibrometer (100) einen Master-Laseroszillator (101) umfasst, der zum Erzeugen einer dritten optischen Wellenform (110b) konfiguriert ist,
die dazu ausgelegt ist, am Empfänger (115) mit der zweiten empfangenen optischen Wellenform (113) überlagert zu werden, um ein überlagertes Signal (116) zu erzeugen, das vom Prozessor (120) zum Bestimmen der Vibrationsfrequenz und der Abstandsinformationen verwendet wird,
und **dadurch gekennzeichnet, dass** das Vibrometer (100) zum Kompensieren einer Verzerrung der ersten optischen Wellenformen (112) vor einem Senden durch den Sender und der dritten optischen Wellenform (110b) vor dem Überlagern am Empfänger (115) unter Verwendung einer oder mehrerer Repräsentationen der Verzerrung, die im Speicher (153a, 153b) gespeichert sind, konfiguriert ist.

6. Optisches System nach Anspruch 5 oder Verfahren nach einem der Ansprüche 2 bis 6, wobei eine Phasenbeziehung zwischen der ersten (112), der zweiten (113) und der dritten (110b) optischen Wellenform deterministisch ist.

**7.** Optisches System nach Anspruch 5 oder 6, wobei ein Separationsabstand zwischen den vibrierenden Objekten auf Basis einer Frequenzmodulationsmenge der ersten Wellenform (112) am Empfänger bestimmt wird; oder Verfahren nach einem vorhergehenden Verfahrensanspruch, wobei die vibrierenden Objekte durch einen Abstand separiert sind, der auf Basis der Frequenzmodulationsmenge der ersten Wellenform (112) am Empfänger bestimmt wird.

**8.** Optisches System nach Anspruch 5 oder einem der Ansprüche 6 bis 7 oder Verfahren nach einem vorhergehenden Verfahrensanspruch, wobei das eine oder die mehreren vibrierenden Objekte ein Teil eines vibrierenden Objektkörpers sind.

**9.** Optisches System nach Anspruch 5 oder einem der Ansprüche 6 bis 8, wobei das Vibrometer (100) zum Messen einer Dopplerverschiebung der empfangenen zweiten optischen Wellenform (113) konfiguriert ist, um die Vibrationsfrequenzinformationen des einen oder der mehreren vibrierenden Objekte zu bestimmen.

**10.** Optisches System nach Anspruch 5 oder einem der Ansprüche 6 bis 11 oder Verfahren nach einem vorhergehenden Verfahrensanspruch, wobei das eine oder die mehreren Merkmale der zweiten optischen Wellenform (113) eine Frequenz und/oder eine Phase beinhalten.

**11.** Optisches System nach Anspruch 5 oder einem der Ansprüche 6 bis 10, wobei das Vibrometer (100) ein Paar von Mach-Zehnder-Modulatoren (103a, 103b) umfasst und wobei die erste und die dritte optische Wellenform (112, 113) jeweils mehrere unter Verwendung des Paares von Mach-Zehnder-Modulatoren (103a, 103b) erzeugte Pulse umfassen.

**Revendications**

**1.** Procédé pour résoudre optiquement un ou plusieurs objets vibrants à une distance inconnue en utilisant un vibromètre (100), le vibromètre comprenant un processeur (120), une mémoire (119) et un dispositif optique comprenant un émetteur et un récepteur (115), le procédé consistant à :

- transmettre une première forme d'onde optique (112) ayant un chirp modulé en fréquence linéaire depuis l'émetteur vers une région de l'espace ;
- recevoir, au niveau du récepteur (115), une deuxième forme d'onde optique (113) réfléchie par le ou les objets vibrants dans la région de l'espace ;
- déterminer, avec le vibromètre (100), des informations de fréquence de vibration et de distance associées au(x) un ou plusieurs objets vibrants en fonction d'une ou de plusieurs caractéristiques de la deuxième forme d'onde optique (113) ; et
- stocker dans la mémoire (119) les informations de fréquence de vibration et de distance déterminées en vue d'un traitement par le processeur (120) ; dans lequel la détermination consiste à effectuer une opération hétérodyne, au niveau d'un photorécepteur dans le récepteur (115), sur une troisième forme d'onde optique (110b) avec la deuxième forme d'onde optique (113) pour produire un signal hétérodyne (116) utilisé pour la détermination ;
et **caractérisé en ce que** le procédé consiste en outre à :

- compenser, au niveau du vibromètre (100), la première forme d'onde optique (112) pour une distorsion avant la transmission, ainsi que la troisième forme d'onde optique (110b) avant l'opération hétérodyne en utilisant une ou plusieurs représentations de la distorsion stockées dans la mémoire (153a, 153b).

**2.** Procédé selon la revendication 1, dans lequel, pendant l'opération hétérodyne, la troisième forme d'onde (110b) est envoyée sous forme d'un signal d'oscillateur local au photorécepteur (115).

**3.** Procédé selon la revendication 1 ou une quelconque revendication précédente, dans lequel la détermination consiste à mesurer un décalage Doppler de la deuxième forme d'onde optique reçue (113) afin de déterminer les informations de fréquence de vibration du ou des objets vibrants.

**4.** Procédé selon la revendication 1 ou une quelconque revendication précédente, dans lequel les première (112) et troisième (110b) formes d'onde optiques comprennent chacune plusieurs impulsions produites en utilisant une paire de modulateurs Mach-Zehnder (103a, 103b).

**5.** Système optique comprenant :

- un vibromètre (100) comprenant un processeur (120), une mémoire (119) et un dispositif optique comprenant un émetteur et un récepteur (115), dans lequel :
- l'émetteur est conçu pour transmettre une première forme d'onde optique (112) ayant un chirp modulé en fréquence linéaire vers une région de l'espace ;
- le récepteur (115) est conçu pour recevoir une deuxième forme d'onde optique (113) réfléchie par un ou des objets vibrants dans la région de l'espace ; et dans lequel le processeur (120) est conçu pour déterminer des informations de fréquence de vibration et de distance associées au(x)dit(s) un ou plusieurs objets vibrants en fonction d'une ou de plusieurs caractéristiques de la deuxième forme d'onde optique (113), et résoudre les emplacements respectifs de chacun du ou des objets vibrants en fonction des informations de fréquence de vibration et de distance déterminées ;

et dans lequel le vibromètre (100) comprend un oscillateur maître laser (101) conçu pour générer une troisième forme d'onde optique (110b) conçue pour être soumise à une opération hétérodyne au niveau du récepteur (115) avec la deuxième forme d'onde optique (113) pour produire un signal hétérodyne (116) utilisé par le processeur (120) pour déterminer les informations de fréquence de vibration et de distance ;

et **caractérisé en ce que** le vibromètre (100) est conçu pour compenser la première forme d'onde optique (112) pour une distorsion avant la transmission par l'émetteur, ainsi que la troisième forme d'onde optique (110b) avant l'opération hétérodyne au niveau du récepteur (115) en utilisant une ou plusieurs représentations de la distorsion stockées dans la mémoire (153a, 153b).

6. Système optique selon la revendication 5 ou procédé selon une quelconque des revendications 2 à 6, dans lequel une relation de phase entre les première (112), deuxième (113) et troisième (110b) formes d'onde optiques est déterministe.

7. Système optique selon la revendication 5 ou la revendication 6, dans lequel une distance de séparation entre les objets vibrants est déterminée au niveau du récepteur en fonction d'une quantité de modulation de fréquence de la première forme d'onde (112), ou

le procédé selon une quelconque revendication de procédé précédente dans lequel les objets vibrants sont séparés par une distance qui est déterminée au niveau du récepteur en fonction de la quantité de modulation de fréquence de la première forme d'onde (112).

8. Système optique selon la revendication 5 ou l'une quelconque des revendications 6 à 7, ou procédé selon une quelconque revendication de procédé précédente, dans lequel le ou les objets vibrants font partie d'un corps d'objets vibrants.

9. Système optique selon la revendication 5 ou l'une quelconque des revendications 6 à 8, dans lequel le vibromètre (100) est conçu pour mesurer un décalage Doppler de la deuxième forme d'onde optique reçue (113) afin de déterminer les informations de fréquence de vibration du ou des objets vibrants.

10. Système optique selon la revendication 5 ou l'une quelconque des revendications 6 à 11, ou procédé selon une quelconque revendication de procédé précédente, dans lequel la ou les caractéristiques de la deuxième forme d'onde optique (113) comprennent l'une au moins d'une fréquence et d'une phase.

11. Système optique selon la revendication 5 ou l'une quelconque des revendications 6 à 10, dans lequel le vibromètre (100) comprend une paire de modulateurs Mach-Zehnder (103a, 103b), et dans lequel les première et troisième formes d'onde optiques (112, 113) comprennent chacune plusieurs impulsions produites en utilisant la paire de modulateurs Mach-Zehnder (103a, 103b).

FIG. 1

EP 2 587 231 B1

*200*

```
┌─────────────────────────────┐
│   MODULATE CARRIER SIGNAL    │─202
└─────────────────────────────┘
              │
              ▼
┌─────────────────────────────┐
│    OBTAIN FM CHIRP SIGNAL    │─204
└─────────────────────────────┘
              │
              ▼
┌─────────────────────────────┐
│    TRANSMIT OPTICAL SIGNAL   │─206
└─────────────────────────────┘
              │
              ▼
┌─────────────────────────────┐
│  RECEIVE TARGET RETURN SIGNAL│─208
└─────────────────────────────┘
              │
              ▼
┌─────────────────────────────┐
│    DETERMINE FREQUENCY       │─210
│       AND RANGE              │
└─────────────────────────────┘
              │
              ▼
┌─────────────────────────────┐
│   PROCESS RECEIVED SIGNAL    │
│  TO DETERMINE SEPARATION     │─212
│         DISTANCE             │
└─────────────────────────────┘
```

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007166049 A
- WO 2004034530 A

- US 79302810 A